# DEMANDE DE BREVET EUROPEEN

(11) **EP 0 650 820 A1**
(43) Date de publication de la demande: **03.05.1995**
(21) Numéro de dépôt: 94440056.3
(22) Date de dépôt: 12.09.1994
(51) Int. Cl.: B29C 65/64, B29D 12/02, B29C 65/02

(54) **Procédé de fabrication automatique de branches de lunettes en matière plastique, et dispositif pour sa mise en oeuvre**

(30) Priorité: 10.09.1993 FR 9310957
(71) Demandeur: COBEPAL SàRL, F-01100 Oyonnax (FR)
(72) Inventeur: Benetti , Jean-Pierre, F - 01810 BELLIGNAT (FR); Perrier , Claude, F - 01100 OYONNAX (FR)
(74) Mandataire: Dénoyez, Hubert

(57) **Abrégé**

Le dispositif comporte un convoyeur (1) muni d'une pince de serrage (10) d'une bande de matière plastique (2), sur lequel sont disposés successivement un générateur de chaleur (3), un poste (4) de mise en place d'armatures métalliques (40), un moyen d'enserrement mobile (5) de l'extrémité (20) de ladite bande (2), un moyen de sciage transversal et un gabarit reproducteur par fraisage.

## Description

La présente invention a pour objet un procédé et un dispositif de fabrication entièrement automatique de branches de lunettes en matière plastique.

Une branche de lunettes en matière plastique comporte généralement une partie en matière plastique traversée longitudinalement par une armature métallique.

On connaît déjà plusieurs procédés de réalisation de telles branches, par exemple par moulage autour de l'armature, ou bien par soudage longitudinal, autour de l'armature, de deux parties moulées constituant ensemble une branche.

Ces procédés sont compliqués et sont assez coûteux car ils nécessitent la réalisation de moules spécifiques pour chaque forme et chaque taille de branche.

On connaît également d'autres procédés plus artisanaux selon lesquels, soit on découpe en forme de branche un copeau de matière plastique que l'on chauffe et dans lequel on introduit ensuite longitudinalement, en force, une armature chauffée, soit on introduit en force l'armature chauffée dans un copeau de matière plastique également chauffé que l'on découpe ensuite.

Ces deux procédés présentent des inconvénients, car d'une part ils ne permettent pas toujours un bon positionnement de l'armature dans la branche, du fait des difficultés de maintien de la partie chauffée lors de l'assemblage, et d'autre part ils ne permettent pas une entière automatisation de la fabrication.

La présente invention vise à remédier à ces inconvénients en proposant un procédé et un dispositif permettant l'entière automatisation de la fabrication de branches de lunettes en matière plastique.

Le procédé objet de la présente invention consiste essentiellement à faire défiler, tout en la maintenant solidement, une bande de matière plastique d'épaisseur convenable, à chauffer l'extrémité de celle-ci, à y introduire en force une armature métallique, puis à séparer ladite extrémité du reste de la bande par des moyens qui sont décrits ci-après.

Les inconvénients liés au maintien de la pièce de matière plastique à armer sont ainsi supprimés, du fait que lors de l'introduction de l'armature, ladite pièce est solidaire d'une bande qu'il est aisé de maintenir solidement.
Selon un premier mode de réalisation du procédé selon l'invention, l'extrémité chauffée de la bande de matière plastique est, après introduction de l'armature métallique, séparée du reste de la bande par sciage transversal puis mise en forme par fraisage après refroidissement.
Selon un second mode de réalisation du procédé selon l'invention, l'extrémité chauffée de la bande de matière plastique est moulée autour de l'armature de manière à la séparer du reste de la bande, après quoi l'armature peut être ou non sortie de la matière plastique, selon que l'on souhaite obtenir une branche de lunette creuse ou déjà armée.
Le dispositif permettant la mise en oeuvre du procédé selon l'invention comporte un moyen d'amenage d'une bande de matière plastique maintenue solidement par des pinces, ladite bande étant déplacée de manière que son extrémité vienne successivement en regard d'un moyen de chauffage, par exemple à haute fréquence, puis d'un moyen d'introduction d'une armature.
Selon le premier mode de réalisation, le dispositif selon l'invention comporte de plus un moyen mobile de serrage latéral de la partie armée permettant d'une part le sciage transversal de la bande afin d'en séparer ladite partie armée, et d'autre part le transport de celle-ci jusqu'à un gabarit reproducteur où on lui donne la forme désirée par fraisage.
Selon le second mode de réalisation le dispositif selon l'invention comporte des moyens permettant d'enserrer l'extrémité chauffée et armée entre deux demi-moules.
Ce second mode de réalisation présente l'avantage supplémentaire de permettre la réalisation d'une branche de lunette creuse longitudinalement dans laquelle peut être insérée ultérieurement une armature, une telle branche creuse étant obtenue par extraction de l'armature, qui peut alors n'être qu'une simple tige gabarit, lorsque la branche est encore prise dans le moule, tandis que celui-ci est refroidi.

Les branches creuses permettent de réaliser des branches armées de longueurs différentes en recoupant lesdites branches creuses et en y insérant des armatures de longueurs adéquates.

Les avantages et les caractéristiques de la présente invention ressortiront plus clairement de la description qui suit et qui se rapporte au dessin annexé, lequel en représente quelques modes de réalisation non limitatifs.

Dans le dessin annexé :
- la figure 1 représente un schéma de principe, où sont combinées une vue de profil et des vues de face, illustrant un premier mode de réalisation du procédé selon l'invention.
- la figure 2 représente un schéma de principe, où sont combinées une vue de profil, des vues de face et des vues de dessus, illustrant un second mode de réalisation du procédé selon l'invention.

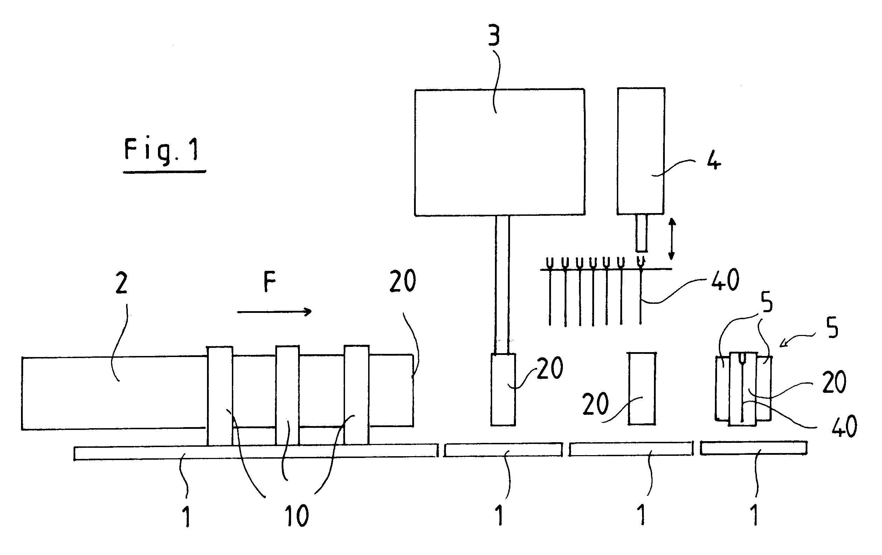

Sur la figure 1 on peut voir, de profil, un convoyeur 1 muni de pinces 10 de serrage d'une bande de matière plastique 2 parallélépipèdique, positionnée sur chant sur le convoyeur 1.

Lors du déplacement, selon la flèche F, de la bande de matière plastique 2 sur le convoyeur 1, l'extrémité 20 de celle-ci se positionne successivement en regard, d'un générateur haute fréquence 3 puis d'un poste 4 de mise en place d'armatures métalliques 40, l'un et l'autre vus de face.

Après l'introduction d'une armature 40 dans l'extrémité 20, celle-ci est enserrée dans les mâchoires 50 d'un étau mobile 5, vu de face, afin d'être séparée de la bande 2 au moyen d'une scie transversale, non représentée, et d'être ensuite transportée jusqu'à un gabarit reproducteur, également non représenté, où elle est découpée en forme par fraisage.

Après la séparation de la partie armée, la bande 2 est ramenée en arrière par le convoyeur 1 et la suite d'opérations est renouvelée.

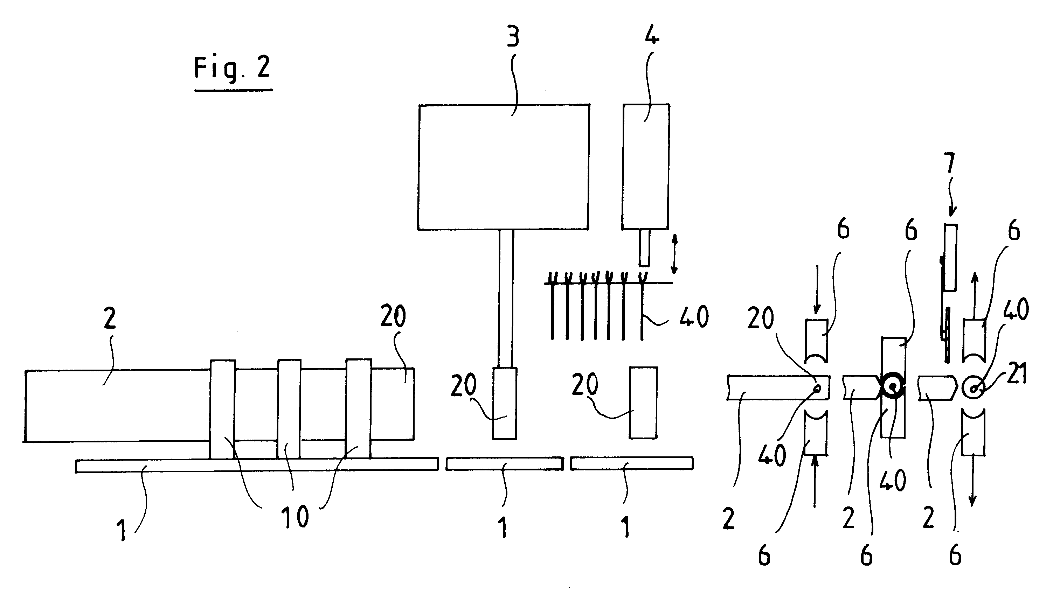

Si on se réfère maintenant à la figure 2 on peut voir comme sur la figure 1 un convoyeur 1, des pinces de serrage 10, une bande de matière plastique 2, un générateur haute fréquence 3 et un poste 4 de mise en place d'armatures métalliques 40.

On peut également voir, vu de dessus, la mise en place, de part et d'autre de l'extrémité 20 chauffée de la bande 2, de deux demi-moules 6, puis la mise en forme de cette extrémité 20 autour de l'armature métallique 40, enfin la libération de la branche 21 moulée lors du retrait des deux demi-moules 6.

Dans le cas d'une fabrication de branches creuses, le dispositif comporte de plus, au-dessus du poste de moulage, un moyen, non représenté, d'extraction de l'armature 40, ou tige gabarit, l'extraction étant réalisée avant le retrait des demi-moules 6, lors du refroidissement de ceux-ci.

Le dispositif selon le deuxième mode de réalisation comporte en outre, en amont du poste de moulage, un poste de sciage transversal 7 ayant pour fonction, après séparation de la branche moulée du reste de la bande 2, de couper l'extrémité de celle-ci afin de réaliser un bord plan, opération nécessitée par le fait qu'une branche n'est pas d'épaisseur uniforme, notamment son extrémité fermée qui comporte un renflement.

## Revendications

**1)** Procédé de fabrication automatique de branches de lunettes en matière plastique, caractérisé en ce qu'il consiste à faire défiler, tout en la maintenant solidement, une bande de matière plastique, à en chauffer l'extrémité, à y introduire en force une armature métallique, à séparer par sciage transversal la partie armée, puis à la découper en forme.

**2)** Dispositif pour la mise en oeuvre du procédé selon la revendication 1 caractérisé en ce qu'il comporte un convoyeur (1) muni d'une pince de serrage (10) d'une bande de matière plastique (2), sur lequel sont disposés successivement un générateur de chaleur (3), un poste (4) de mise en place d'armatures métalliques (40), un moyen d'enserrement mobile (5) de l'extrémité (20) de ladite bande (2), un moyen de sciage transversal et un gabarit reproducteur par fraisage.

**3)** Procédé de fabrication automatique de branches de lunettes en matière plastique, caractérisé en ce qu'il consiste à faire défiler, tout en la maintenant solidement, une bande de matière plastique, à en chauffer l'extrémité, à y introduire en force une armature métallique ou une tige gabarit, puis à mouler la matière plastique chauffée autour de l'armature, de manière à la séparer du reste de la bande.

**4)** Procédé selon la revendication 3 caractérisé en ce qu'après l'opération de moulage, et avant le démoulage, la tige gabarit est extraite de la branche.

**5)** Procédé selon l'une des revendications 3 ou 4, caractérisé en ce qu'un sciage transversal est opéré en extrémité de la bande après le moulage de la branche.

**6)** Dispositif pour la mise en oeuvre du procédé selon l'une des revendications 3, 4 ou 5, caractérisé en ce qu'il comporte un convoyeur (1) muni d'une pince de serrage (10) d'une bande de matière plastique (2), sur lequel sont disposés successivement un générateur de chaleur (3), un poste (4) de mise en place d'une armature métallique (40), ou d'une tige gabarit, et des moyens permettant d'enserrer l'extrémité chauffée et armée entre deux demi-moules (6).

**7)** Dispositif selon la revendication 6 caractérisé en ce qu'il comporte, au-dessus du poste de moulage, un poste d'extraction de la tige gabarit.

**8)** Dispositif selon les revendications 6 ou 7, caractérisé en ce qu'il comporte, en amont du poste de moulage, un poste (7) de sciage transversal.
